# EUROPEAN PATENT APPLICATION

(11) **EP 3 298 935 A1**
(43) Date of publication of application: **28.03.2018**
(21) Application number: 16796748.8
(22) Date of filing: 17.05.2016
(51) Int. Cl.: A47J 43/04, A47J 43/046, A47J 27/62

(54) **STIRRING AND GRINDING-TYPE AUTOMATIC COOKING APPARATUS**

(30) Priority: 18.05.2015 KR 20150069046; 16.05.2016 KR 20160059619
(71) Applicant: Kim, Jae-Won, Gyeongsangnam-do 51015 (KR)
(72) Inventor: KIM, Jae Won, Gyeongsangnam-do 51015 (KR); KIM, Young Ki, Gimhae-si Gyeongsangnam-do 51006 (KR)
(74) Representative: Krauns, Christian
(86) International application number: PCT/KR2016/005185
(87) International publication number: WO 2016/186421

(57) **Abstract**

The present invention relates to an agitation milling type automatic apparatus including: a main body including a positioning part formed at a top surface of the main body; a drive motor installed inside the main body and provided therein with a drive shaft protruding upward; a cooking vessel detachably engaged with the positioning part of the main body and formed therein with a cooking space part receiving materials; a vessel cover detachably engaged with an open top end of the cooking vessel; an agitation milling part provided at a lower center of the cooking vessel, connected with the drive shaft to be rotated, and including a blade provided at a top end of the agitation milling means to be rotated in the cooking space part of the cooking vessel to agitate and/or mill the materials; a heating part configured to heat an inside of the cooking space part of the cooking vessel; and a controller configured to control an operation of the drive motor and the hating part to automatically cook according to an input signal of a control panel provided at one lateral surface of the main body.

## Description

### [Technical Field]

The present invention relates to an automatic cooking apparatus for manufacturing foods such as porridges, baby foods, soy milks, jams and fruits.

### [Background Art]

In general, porridges or baby foods have widely been used as substitution of meal of children or patients who cannot properly eat foods. After grains and other materials are supplied to an inside of a cooking vessel together with water, the cooking is completed by heating the mixture with weak fire.

In recent years, a cooker for easily cooking porridges or baby foods has been developed. For example, a device for manufacturing a household porridge is disclosed in Korean Patent Laid-Open Publication No. 10-2005-0032272 (publication date: April 4, 2005). The device for manufacturing a household porridge includes a vessel into which a predetermined amount of water and raw materials of porridges are input, having a circular cylinder shape including an open top side, provided therein with a vessel handle for movement at one side thereof, and provided therein with a latching device at both ends of a top opening; and a driver including a motor including a bottom surface having a shape corresponding to the top opening of the vessel, a latch pressed to a position corresponding to the latching device by the latching device being formed both ends of an outer side, and a milling blade provided at an end of a rotation shaft to be inserted into an inner side of the vessel at the bottom surface thereof, a heater provided at an outside of the milling blade to heat water, and a controller provided at an inner side thereof to control the motor and the heater.

The device for manufacturing a household porridge described as above finally manufactures a porridge in a method of milling materials by rotating a milling blade after completing heating cook for a predetermined time by providing material into the vessel to completely stop an operation of the heater.

However, when cooking the porridges or the baby foods in the above method, much bubble occurs during a heating cook process by a heater, materials provided to an inside of a cooling vessel are pressed or burnt on an inner wall or a bottom surface of a cooking vessel so that a flavor of the porridge or the baby food is deteriorated and it is very difficult to wash the vessel.

### [DISCLOSURE]

### [Technical Problem]

The present invention has been made in an effort to provide an agitation mill type automatic cooking apparatus having advantages of preventing materials provided into a cooking vessel from being pressed or burnt of an inner wall or a bottom surface of a cooking vessel by continuously agitating the materials by an agitation milling part from a cooking start time to a cooking finish time and increasing a taste of foods by uniformly mixing the materials.

### [Technical Solution]

An exemplary embodiment of the present invention provides an agitation mill type automatic cooking apparatus capable of increasing a taste of foods by agitating and milling materials as a thin particle by high speed rotation of an agitation milling part after stop of a heating part and cooking various foods such as soy milks.

Another embodiment of the present invention provides, an agitation mill type automatic cooking apparatus capable of repairing, additionally agitating or milling separate food ingredients by performing agitation by low speed rotation of an agitation milling part or performing milling by high speed rotation of an agitation milling part regardless of heating of a heating means.

Yet another embodiment of the present invention provides an agitation mill type automatic cooking apparatus including an agitation milling part removably installed at a cooking vessel so that washing is easily performed.

An exemplary embodiment of the present invention provides an agitation milling type automatic apparatus including: a main body including a positioning part formed at a top surface of the main body; a drive motor installed inside the main body and provided therein with a drive shaft protruding upward; a cooking vessel detachably engaged with the positioning part of the main body and formed therein with a cooking space part receiving materials; a vessel cover detachably engaged with an open top end of the cooking vessel; an agitation milling part provided at a lower center of the cooking vessel, connected with the drive shaft to be rotated, and including a blade provided at a top end of the agitation milling means to be rotated in the cooking space part of the cooking vessel to agitate and/or mill the materials; a heating part configured to heat an inside of the cooking space part of the cooking vessel; and a controller configured to control an operation of the drive motor and the hating part to automatically cook according to an input signal of a control panel provided at one lateral surface of the main body.

According an exemplary embodiment of the present invention, the blade may be rotated slowly at first preset speed to agitate the materials or may be rotated at high speed of second rotation speed higher than the first speed to mill the materials to prevent the materials from being pressed.

According to an exemplary embodiment of the present invention, the controller may operate the heating part for a preset agitation time when an automatic cooking signal is received from the control panel to heat the materials, and may rotate the blade of the agitation milling part slowly at first preset speed to prevent the materials from being pressed to agitate the materials, and may control operations of the drive motor and the heating part by rotating the blade of the agitation milling part 150 a preset milling time at second speed higher than the first speed to mill the materials.

According to an exemplary embodiment of the present invention, the first speed may be in a range of 30 rpm to 300 rpm and the second speed may be in a range of 4000 rpm to 6000 rpm.

According to an exemplary embodiment of the present invention, the agitation milling type automatic apparatus may further include a cover coupling sensor installed through the cooking vessel and the positioning part of the main body to provide a signal according to presence of coupling of the vessel cover to the controller.

According to an exemplary embodiment of the present invention, the cover coupling sensor may include a vertical through part vertically formed through one side of the cooking vessel; a first operation rod elastically biased upward in the vertical through part and pressed by the vessel cover upon coupling of the vessel cover to be moved downward and including a first magnet provided at a bottom end of the first operation rod; a second operation rod movably installed at a position corresponding to the first magnet in the positioning part of the main body and including a second magnet having the same polarity as that of the first magnet provided at a top end of the second operation rod; an operation pin including one end coupled with a bottom end of the second operation rod to being vertically moved integrally with the second operation rod; and a micro switch connected with an opposite end of the operation pin to be turned on/off according to a vertical motion of the second operation rod to provide a signal according to presence of coupling of the vessel cover to the controller.

According to an exemplary embodiment of the present invention, the agitation milling type automatic apparatus may further include a temperature sensor configured to measure a temperature of the cooking vessel to provide a signal on a cooking temperature to the controller.

According to an exemplary embodiment of the present invention, the agitation milling type automatic apparatus may further include a locking part including an elastic protrusion installed at an inner wall of the positioning part and caught at the cooking vessel upon positioning of the cooking vessel to prevent the cooking vessel from being optionally detached, and a release push button installed on the main body to allow separation of the cooking vessel by retreating the elastic protrusion upon pressing.

According to an exemplary embodiment of the present invention, the drive motor may include a brushless DC (BLDC) motor.

According to an exemplary embodiment of the present invention, the positioning part of the main body may include a first connector, and a second connector may be provided at a bottom surface of the cooking vessel and may be electrically connected to the first connector when the cooking vessel may be positioned in the positioning part of the main body to supply power to the heating part.

According to an exemplary embodiment of the present invention, a first shaft coupler may be coupled with a drive shaft of the drive motor and may protrude on the positioning part, and a second shaft coupler may be provided at a bottom end of the agitation milling part and may be connected with the first shaft coupler when the second shaft coupler is positioned in the cooking vessel.

According to an exemplary embodiment of the present invention, a through hole may be formed at a center of the vessel cover and a stopper may be openably and closably coupled with the through hole.

According to an exemplary embodiment of the present invention, a steam outlet having a slit shape may be formed at an outer peripheral surface of the stopper, a protection flap part may protrude outward in a radial direction at a top side of the stopper, and a handle may be provided at a top surface of the stopper.

According to an exemplary embodiment of the present invention, the agitation milling part may include: a rotation shaft configured to receive a torque from the drive motor to rotate the blade; a bearing cover disposed at a radius outer side of the rotation shaft through a bottom surface of the cooking vessel; and a detaching lever mounted at a lower portion of the bearing cover, wherein an upper of the bearing cover may be fixed to a lower top side of the cooking vessel, and the detaching lever may be selectively coupled with the bearing cover in a bottom surface of the cooking vessel so that the agitation milling part is detached from the cooking vessel.

An assembling protrusion may be formed at a radius outer surface of the bearing cover, an assembling groove receiving the assembling protrusion may be formed at a radius inner surface of the detaching lever, and the detaching lever may be rotated in one direction or an opposite direction along an extension direction of the assembling groove and is separated from the bearing cover.

### [Advantageous Effects]

Since the agitation mill type automatic cooking apparatus according to the present invention includes an agitation milling means for agitating and/or milling materials in a cooking vessel while being rotated by a drive motor in addition to a heating means for heating an inner bottom surface of a cooking vessel, materials provided into the cooking vessel may be continuously agitated by low speed rotation of an agitation milling means to prevent the occurrence of bubble, materials are prevent from being pressed or burnt on a bottom surface or an inner wall of the cooling vessel, and the materials may be uniformly mixed to increase a flavor of foods.

Further, in the agitation mill type automatic cooking apparatus according to the present invention, materials may be agitated and milled as a fine particle by high speed rotation of the agitation milling means if necessary to increase a flavor of foods and to cook various foods such as soy milks.

Moreover, since a cover coupling sensor for providing a signal according to presence of engagement of a vessel cover with a cooking vessel and a placing portion of a main body to a controller is installed at the agitation mill type automatic cooking apparatus according to the present invention, only when a vessel cover is engaged with the cooking vessel, operations (heating, milling and/or agitation) are possible

Therefore, when engagement of a vessel cover with a cooking vessel is not completely achieved or the vessel cover is wrongly engaged with the cooking vessel, since the agitation mill type automatic cooking apparatus according to the present invention is not operated, safety accidents, failure, or damage do not occur.

In addition, in the agitation mill type automatic cooking apparatus another exemplary embodiment of the present invention, the agitation milling means may be detached from the cooking vessel so that food milled materials pressed on the agitation milling part may be completely washed to be hygienically managed.

### [Description of the Drawings]

FIG. 1 is a perspective view illustrating an agitation mill type automatic cooking apparatus according to an exemplary embodiment of the present invention.
FIG. 2 is an exploded perspective view of FIG. 1.
FIG. 3 is a partial cross-sectional view illustrating an agitation mill type automatic cooking apparatus according to an exemplary embodiment of the present invention.
FIG. 4 is a perspective view illustrating a blade according to an exemplary embodiment of the present invention.
FIG. 5 is a cross-sectional view illustrating an operation of a cover engagement sensor according to an exemplary embodiment of the present invention.
FIG. 6 is a cross-sectional view illustrating a locking means according to an exemplary embodiment of the present invention.
FIG. 7 is a partial exploded perspective view illustrating an agitation mill type automatic cooking apparatus including an agitation milling part according to another exemplary embodiment of the present invention.
FIG. 8 is a perspective view illustrating a downward direction of an agitation mill type automatic cooking apparatus including an agitation milling part according to another exemplary embodiment of the present invention.
FIG. 9 is a cross-sectional view taken along line AA of FIG. 8.

### [Mode for Invention]

Hereinafter, the exemplary embodiment of the present invention will be described with reference to the accompanying drawings. However, the embodiments will be described with reference to accompanying drawings in detail so that those skilled in the art to which the invention pertains can easily realize the embodiments, which does not limit the technical idea and scope of the principles of the present invention.

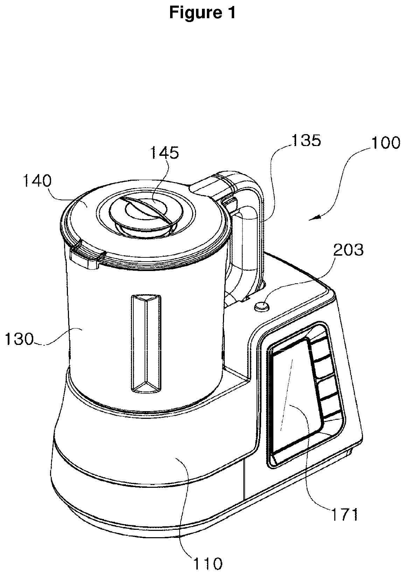

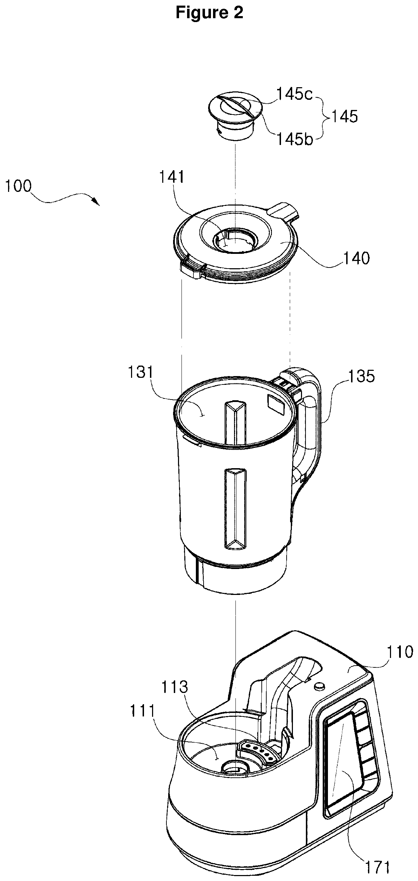

The agitation mill type automatic cooking apparatus 100 according to an exemplary embodiment of the present invention manufactures foods such as porridges, baby foods, soy milks, jams and fruits. As shown in FIG. 1 to FIG. 6, the agitation mill type automatic cooking apparatus 100 according to an exemplary embodiment of the present invention includes a main body 110 including a positioning part 111 formed at a top surface of the main body 110; a drive motor 120 installed inside the main body 110 and provided therein with a drive shaft 121 protruding upward; a cooking vessel 130 detachably engaged with the positioning part 111 of the main body 110 and formed therein with a cooking space part 131 receiving materials; a vessel cover 140 detachably engaged with an open top end of the cooking vessel 130; an agitation milling part 150 provided at a lower center of the cooking vessel 130, connected with the drive shaft 121 to be rotated, and including a blade provided at a top end of the agitation milling means 150 to be rotated in the cooking space part 131 of the cooking vessel 130 to agitate and/or mill the materials; a heating part 160 configured to heat an inside of the cooking space part 131 of the cooking vessel 130; and a controller 170 configured to control an operation of the drive motor 120 and the hating part 160 to automatically cook according to an input signal of a control panel 171 provided at one lateral surface of the main body 110.

In this case, the main body 110 supports the cooking vessel 130 and forms a space in which the drive motor 120 for transferring a rotational driving force to the agitation milling part 150 is installed.

The positioning part 111 is formed at a top surface of the main body 110. The cooking vessel 130 is detachably positioned on the positioning part 111. According to an exemplary embodiment of the present invention, the positioning part 111 may have a groove shape so that the cooking vessel 130 is inserted into an inner side of the positioning part 111. Further, the positioning part 111 may be formed at a lower portion of the cooking vessel 130 to have a shape including a protrusion inserted in a groove, and may have various shapes in which the cooking vessel 120 is positioned. The positioning part 111 of the main body 110 includes a first connector 113 configured to supply power to the heating part 160 when the first connector 113 is electrically connected to a second connector 133 of the cooking vessel upon positioning of the cooking vessel 130. It is preferred that the first connector 113 includes a general contact-bonded connector. Moreover, an adsorption plate 115 is provided at a bottom surface of the main body 110 and stably fixes a position of the main body 110.

A drive motor 120 is installed inside the main body 110. The drive motor 120 transfers a rotational driving force to the agitation milling part 150 to be described later. Although all types of known motors are applicable to the drive motor 120, it is preferred that a brushless DC (BLDC) motor is applied as the drive motor 120.

The BLDC motor has a relatively high torque in high speed rotation as well as high speed rotation similar to a characteristic of a 3 phase induction motor and is particularly suitable for high speed rotation, drives a current of a coil as a non-contact type semiconductor to have a long life span, not to generate noises or electronic noises, and to directly control speed by a motor drive circuit itself.

The drive shaft 121 of the drive motor 120 protrudes upward, a first shaft coupler 151 of the agitation milling part 150 is coupled with the drive shaft 121, so that the rotational driving force of the drive motor 120 may be transferred to the agitation milling part 150, and protrudes an upper bottom surface of the positioning part 111. The first shaft coupler 123 of the drive motor 120 is coupled with the second shaft coupler 151 of the agitation milling part 150 by a coupler type coupling applied to a general motor shaft.

The cooking vessel 130 is detachably coupled in the positioning part 111 of the main body 110. The cooking vessel 130 is a vessel for cooking foods such as porridges, baby foods, soy milks, jams and fruits, and is formed therein with a cooking space part 131 configured to receive materials.

Moreover, a second connector 133 is provided at a bottom surface of the cooking vessel 130. The second connector 133 is electrically connected to a first connector 113 in the positioning part 111 when the cooking vessel 130 is exactly positioned in the positioning part 11 of the main body 110 to supply power to the heating part 160, and includes a general contact-boned type connector. Further, a gripping handle 135 is provided at one side of the cooking vessel 130.

The vessel cover 140 is detachably coupled with the open top end of the cooking vessel 130. The vessel cover 140 closes the open top end of the cooking vessel 130 to prevent materials from being escaped to the outside during cooking.

A through hole 141 is formed at a center of the vessel cover 140. It is preferred that a stopper 145 is openably and closably coupled with the through hole 141. The stopper 145 is open to be used when additional materials are provided into the cooking vessel 130 during cooking or sauce materials for improving taste are provided into the cooking vessel 130 after cooking.

When the stopper 145 is open after cooking, hands of a user are exposed to steam at a high temperature so that the user may get burned. In order to prevent the burn risk, a steam outlet 145a having a slit shape vertically extend long is formed at an outer peripheral surface of the stopper 145. A protection flap part 145b protrudes outward in a radial direction at a top side of the stopper 145 similar to a flange. A handle 145c is provided at a top surface of the stopper 145.

After cooking, although the stopper 145 is open, since steam at a high temperature exhausted from the steam outlet 145a is interrupted by the protection flap part 145b to be bypassed so that a hand of a user gripping the handle 145c does not make directly contact with the steam at the high temperature, the burn may be prevented.

The agitation milling part 150 is provided at a lower center of the cooking vessel 130. The agitation milling part 150 rotates a blade 153 at an inner bottom side of the cooking vessel 130 at low speed or high speed to agitate and/or mill materials in the cooking vessel 130.

A second shaft coupler 151 connected with a first shaft coupler 123 of the cooking vessel 130 is provided at a top end of the agitation milling part 150 so that the second shaft coupler 151 is rotated to be connected with a drive shaft 121 of the drive motor 120 upon positioning of the cooking vessel 130. A blade 153 is provided at a top end of the agitation milling part 150 and is rotated at a top side of a cooking space part 131 of the cooking vessel 130 to agitate the materials at low speed or to mill the materials at high speed.

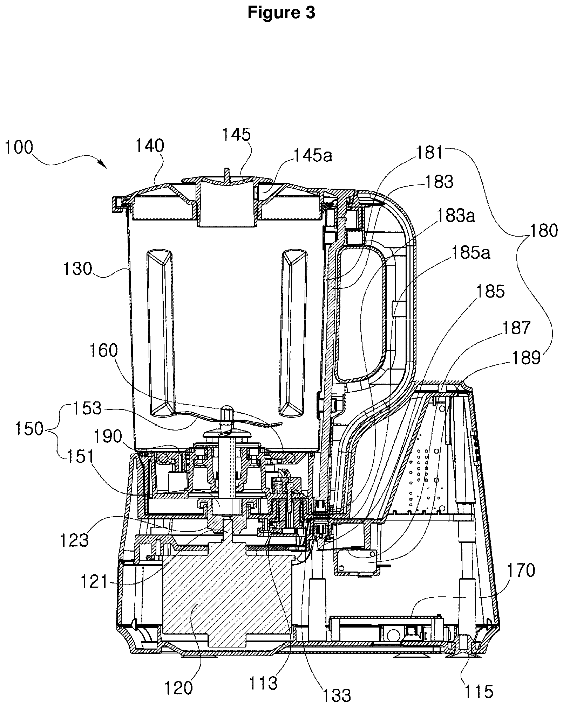

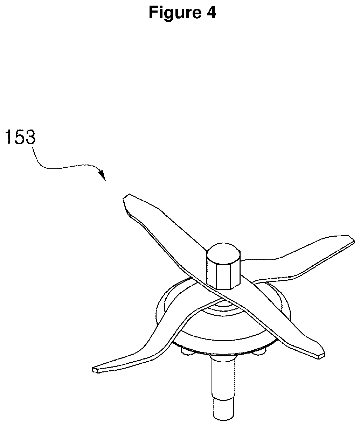

As shown in FIG. 3 and FIG. 4, the blade 153 has a structure where two blade members cross each other in a crisscross (+). Each blade member has a shape where one side is inclined and extends upward from a center portion engaged with another blade member and an opposite side is inclined and extends downward and is bent downward at one end corresponding to a top end and is bent upward at an opposite end corresponding to a bottom end.

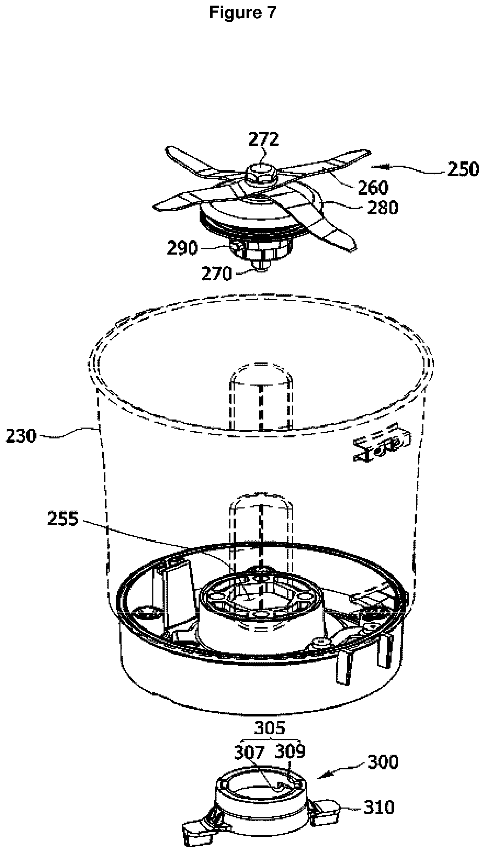

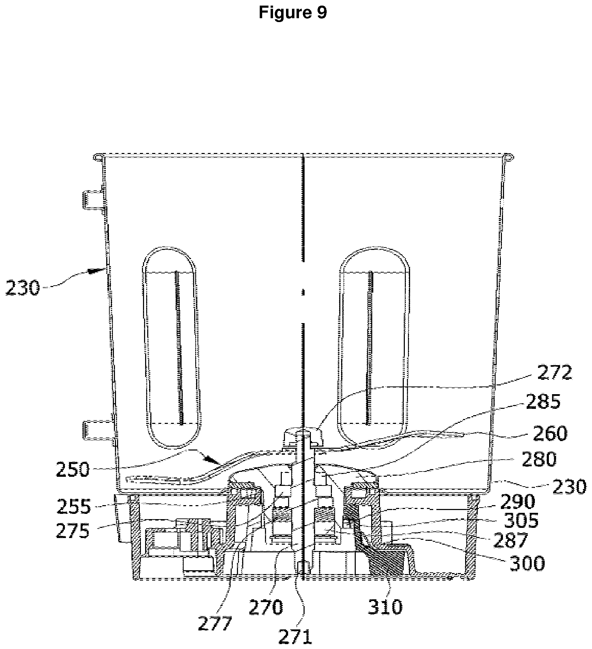

In another exemplary embodiment of the present invention, the agitation milling part 250 may be detachably provided at a lower center of the cooking vessel 230. The agitation milling part 250 according to another exemplary embodiment of the present invention will be described in detail with reference to FIG. 7 to FIG. 9.

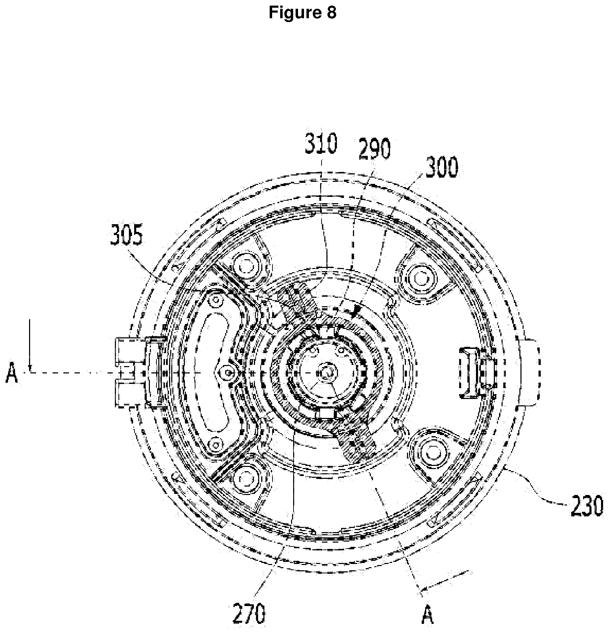

As shown FIG. 7 and FIG. 8, the agitation milling part 250 includes a blade 260; a rotation shaft 270 configured to rotate the blade 260; bearings 275 and 277 configured to allow relative rotation of the cooking vessel 230 and the rotation shaft 270 at a radial outer side of the rotation shaft 270; a bearing cover 280 configured to receive the bearings 275 and 277; and a detaching lever 300 configured to selectively detach the agitation milling part 250 from the cooking vessel 230.

As described above, the blade 260 rotates a lower space of the cooking vessel 230 at low speed or high speed to agitate and/or mill the materials inside the cooking vessel 230.

The rotation shaft 270 receives a driving force from the drive shaft 121 of the drive motor 120 to be rotated. To this end, a second shaft coupler 271 is formed at a bottom end of the rotation shaft 270 and may be engaged with the drive shaft 121 of the drive motor 120 to be rotated together therewith. A screw cap 272 may be provided at a top end of the rotation shaft 270 to fix the blade 260.

The bearings 275 and 277 are installed at an outer peripheral surface of the rotation shaft 270, and allow relative rotation between the rotation shaft 270 acting as a rotation element and the cooking vessel 230 acting as a fixing element. A plurality of bearings 275 and 277 may be provided, and a predetermined space may be formed between the plurality of bearings 275 and 277. The bearings 275 and 277 may apply various known bearings such as a rolling bearing and a sliding bearing according to a contact state.

The bearing cover 280 is inserted into a top side of a coupling hole 255 which is formed at a lower center of the cooking vessel 230. In this case, an upper portion of the bearing cover 280 is formed larger than the coupling hole 255, and is caught at a top surface of the cooking vessel 230. Further, since the bearing cover 280 receives the bearings 275 and 277 an inner peripheral surface thereof, the bearings 275 and 277 may be stably installed at an outer peripheral surface of the rotation shaft 270.

Oil seals 285 and 287 may be provided between the bearing cover 280 and the rotation shaft 270. The oil seals 285 and 287 are installed at an axial outer side of an installed position of the bearings 275 and 277, and prevent oils from being leaked and cutoff the penetration of external foreign substances.

An assembling protrusion 290 is formed at an outer peripheral surface of the bearing cover 280. The assembling protrusion 290 may be selectively coupled with an assembling groove 305 of the detaching lever 300 coupled with a bottom side of the bearing cover 280.

The detaching lever 300 has a cylindrical shape and is coupled with a lower portion of the cooking vessel 230. The detaching lever 300 may be rotated in one direction or an opposite direction to be selectively coupled with the bearing cover 280. A gripping par 310 may be formed at an outer peripheral surface or a bottom end of the detaching lever 300 to rotate the detaching lever 300.

The detaching lever 300 is mounted at a bottom side of a coupling hole 255 which is formed in the cooking vessel 230. In this case, the detaching lever 300 meets with an outer peripheral surface of the bearing cover 280 at an inner of the coupling hole 255. The assembling groove 305 is formed at an inner peripheral surface of the detaching lever 300. The assembling groove 305 is selectively coupled with the assembling protrusion 290.

In a state that the assembling groove 305 is coupled with the assembling protrusion 290, the detaching lever 300 and the bearing cover 280 are vertically fixed while being interposed the cooking vessel 230. When the coupling of the assembling groove 305 with the assemble protrusion 290 is released, the detaching lever 300 and the bearing cover 280 may be separated from the cooking vessel 230, respectively.

The assembling groove 305 of the detaching lever 300 may be coupled with the assembling protrusion 290 of the bearing cover 280 in various forms. For example, referring to FIG. 7 and FIG. 8, the assembling groove 305 may include a circumferential extension groove 307 and an axial extension groove 309. The assembling protrusion 290 having a fixed position may be inserted into the assembling groove 305. Accordingly, the detaching lever 300 may be moved in an extension direction of the assembling groove 305.

That is, if the assembling protrusion 290 is located at the circumferential extension groove 307 of the detaching lever 300, the detaching lever 300 is coupled with the bearing cover 280, and is fixed to a lower portion of the cooking vessel 230. If the detaching lever 300 is rotated using the gripping part 310, the assembling protrusion 290 is located at the axial extension groove 309. Accordingly, the detaching lever 300 is vertically moved in an extension direction of the axial extension groove 309, and is separated from the bearing cover 280. Accordingly, the detaching lever 300 and the bearing cover 280 may be separated from the cooking vessel 230. Meanwhile, the agitation milling part 250 of the present invention is not limited to the above example. As another example, an assembling groove is formed at the bearing cover 280 and an assembling protrusion is formed at the detaching lever 300, so that the agitation milling part 250 may be implemented to be detached from the cooking vessel 230.

According to the related art, in order to wash milled materials pressed on the blade 260, a user puts a hand in an inner side of the cooking vessel 230, separates a screw cap 272, and takes out the blade 260 from the rotation shaft 270. In this manner, it is difficult to completely wash other configurations except for the blade 260, and a sharp region of the blade 260 frequently cuts off the hand.

However, in the present invention, each configuration of the agitation milling part 250 may be detached from the cooking vessel 230 so that a food milled material pressed on the agitation milling part 250 may be completely washed, it is easy to detach the agitation milling part 250 so that washing is easy, and a wound danger upon washing may be removed.

A heating part 160 is provided at a lower portion or a side of the cooking vessel 130. Particularly, it is preferred that the heating part 160 is located at the lower portion of the cooking vessel 130. When a first connector 113 in the positioning part 111 of the main body 110 is electrically connected to the second connector 133 of a bottom surface of the cooking vessel 130 according to positioning of the heating part 160 in the cooking vessel 130 so that power is supplied, the heating part 160 converts an electrical energy into a heat energy to heat the inside of the cooking vessel 130 so that heat cooking of the materials is possible. For example, the heating part 160 may include an electric heater such as an aluminum heater, a PTC heater, and a ceramic heater for generating heat using a heating effect of a current.

The main body 110 includes a controller 170. The controller 170 controls an operation of a drive motor 120 for operation of the agitation milling part 150 and an operation of the heating part 160 for heating the cooking vessel 130 to automatically cook according to an input signal of a control panel 171 provided at one lateral surface of the main body 110.

For example, the control panel 171 includes a button configured to input cooking mode selection, an operation time, stop, and a washing mode selection by a user, and a display panel configured to display a current operation mode, a current state, a residual cooking time, and warning to the user. The button may be integral with the display panel in the form of a touch screen.

Meanwhile, the controller 170 controls constituent elements of the agitation milling type automatic cooking apparatus 100, particularly, a drive motor 120 and the heating part 160 to automatically perform a cooking process according to a cooking input signal of a user input from the control panel 171.

For example, the controller 170 may control to heat materials through the heating part 160 for a preset agitation time, to agitate the materials by rotating the blade 153 at preset speed, to heat for a preset spread time, and to stop the agitation and to perform a material spread process upon reception of an input signal of an automatic general porridge cooking mode.

Further, the controller 170 may control to heat materials through the heating part 160 for a preset agitation time, to agitate the materials by rotating the blade 153 at preset speed, and to mill the materials by rotating the blade 153 at speed faster than preset agitation speed for a preset milling time upon reception of an input signal of an automatic fine porridge cooking mode.

In addition, upon reception of a manual cooking mode, the controller 170 may control to perform a process such as agitation or milling for an input signal reception time through a control panel 171.

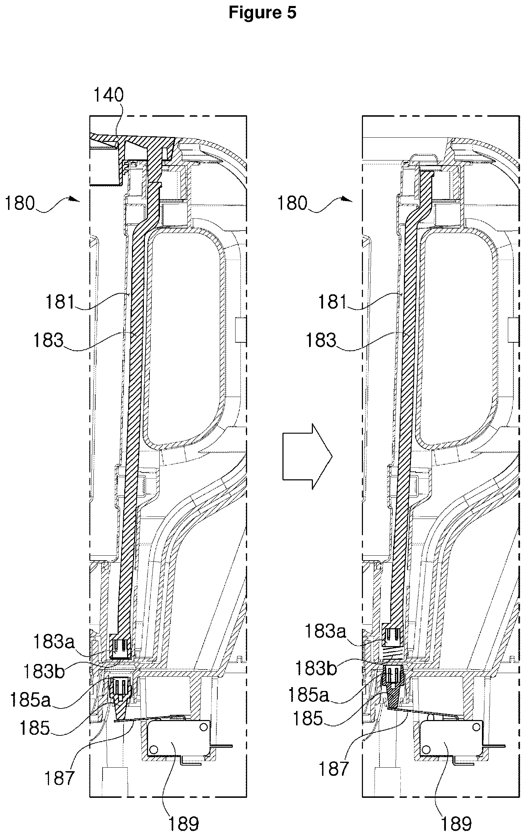

It is preferred to install a cover coupling sensor 180 installed through the cooking vessel 130 and the positioning part 111 of the main body 110. As shown in FIG. 5 in detail, the cover coupling sensor 180 is a type of safety means configured to make the agitation milling type automatic cooking apparatus 100 to be in an operable state when the vessel cover 140 is exactly coupled by providing a signal according to presence of coupling of the vessel cover 140 configured to close an open top surface of the cooking vessel 130.

As shown in FIG. 3 and FIG. 5, the cover coupling sensor 180 may include a vertical through part 181 vertically formed through one side of the cooking vessel 130; a first operation rod 183 elastically biased upward in the vertical through part 181 and pressed by the vessel cover 140 upon coupling of the vessel cover 140 to be moved downward and including a first magnet 183a provided at a bottom end thereof; a second operation rod 185 movably installed at a position corresponding to the first magnet 183a in the positioning part 111 of the main body 110 and including a second magnet 185a having the same polarity as that of the first magnet 183a provided at a top end thereof; an operation pin 187 including one end coupled with a bottom end of the second operation rod 185 to being vertically moved integrally with the second operation rod 185; and a micro switch 189 connected with an opposite end of the operation pin 187 to be turned on/off according to a vertical motion of the second operation rod 185 to provide a signal according to presence of coupling of the vessel cover 140 to the controller 170.

As shown in a right drawing of FIG. 5, when the vessel cover 140 is not coupled with the open top end of the cooking vessel 130, the first operation rod 183 is moved upward by a spring 183b so that the first magnet 183a installed at a bottom end of the first operation rod 183 is located at a top side, which does not apply a repulsive force to the second magnet 185a. As the result, the second operation rod 185 is located at the top side not to press the operation pin 187 so that a signal (off) corresponding to a non-coupling state of the vessel cover 140 from the micro switch 189 is provided to the controller 170, which leads to the agitation milling type automatic cooking apparatus 100 to be inoperable.

As shown in a left drawing of FIG. 5, when the vessel cover 140 is coupled with the open top end of the cooking vessel 130, the first operation rod 183 is moved downward by pressing the vessel cover 140 so that the first magnet 183a installed at a bottom end of the first operation rod 183 approaches the second magnet 185a to apply the repulsive force to the second magnet 185a. Accordingly, the second operation rod 185 is moved downward to press and move the operation pin 187 downward so that a signal (on) corresponding to a coupling state of the vessel cover 400 from the micro switch 189 is provided to the controller 170, which leads to the agitation milling type automatic cooking apparatus 100 to be operable.

Moreover, the cover coupling sensor 180 according to another exemplary embodiment includes the cover coupling sensor 180 may include a vertical through part 181 vertically formed through one side of the cooking vessel 130; a first operation rod 183 elastically biased upward in the vertical through part 181 and pressed by the vessel cover 140 upon coupling of the vessel cover 140 to be moved downward and including a first magnet 183a provided at a bottom end thereof; and a magnetic reed switch for proximity sensing (not shown) installed at a position corresponding to the first magnet 183a in the positioning part 111 of the main body 110 to provide a signal according to presence of coupling of the vessel cover 140 corresponding to a magnetic field increased by approach of the first magnet 183a when the first operation rod 183 is moved downward.

When the vessel cover 130 is not coupled with the open top end of the cooking vessel 130, the first operation rod 183 is moved upward by a spring 183b so that the first magnet 183a installed at a bottom end of the first operation rod 183 is separated from the magnetic reed switch for proximity sensing to provide a signal corresponding to a non-coupling state of the vessel cover 140 from the magnetic reed switch for proximity sensing to the controller 170 so that the agitation milling type automatic cooking apparatus 100 is inoperable.

As shown in FIG. 3, when the vessel cover 140 is coupled with the open top end of the cooking vessel 130, the first operation rod 183 is moved downward by pressing the vessel cover 140 so that the first magnet 183a installed at a bottom end of the first operation rod 183 approaches the magnetic reed switch for proximity sensing to provide a signal corresponding to a coupling state of the vessel cover 140 from the magnetic reed switch for proximity sensing to the controller 170, which leads to the agitation milling type automatic cooking apparatus 100 to be operable.

Furthermore, it is preferred that the main body 110 includes a temperature sensor configured to measure a temperature of the cooking vessel 130. The temperature sensor 190 measures a temperature of the cooking vessel 130 to provide a signal on a cooking temperature to the controller 170 so that foods such as porridges, baby foods, soy milks, jams and fruits may be controlled under a specific cooking temperature and shortage of materials including water may be detected.

When heating is generally achieved by the heating part 160 in a state that there is no or insufficient materials including the water in the cooking vessel 130, a temperature of the cooking vessel 130 measured by the temperature sensor 190 is rapidly changed. Based on the rapid change of the temperature, the controller 170 may detect a state where there is no or insufficient materials including the water in the cooking vessel 130

In addition, it is preferred that a locking part 200 configured to prevent the cooking vessel 130 from being optionally detached upon positioning of the cooking vessel 130 is provided at the main body 110.

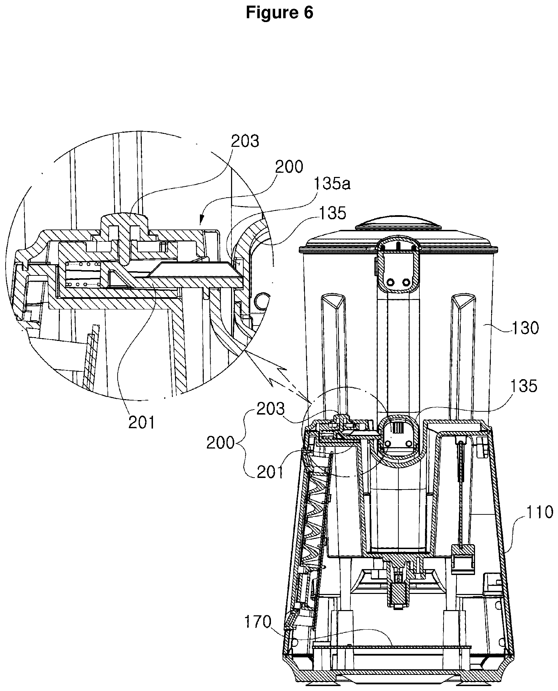

As shown in FIG. 6, the locking part 200 may be configured by a combination of an elastic protrusion 201 installed at an inner wall of the positioning part 111 and caught at the cooking vessel 130 upon positioning of the cooking vessel 130 to prevent the cooking vessel 130 from being optionally detached, and a release push button 203 installed on the main body 110 to allow separation of the cooking vessel 130 by retreating the elastic protrusion 201 upon pressing. In order to operation the locking part 200, a locking groove 135a is formed at a corresponding position of the elastic protrusion 201 in the cooking vessel 130, particularly, in the gripping handle 135 thereof so that an elastic protrusion 201 is inserted and caught.

Accordingly, if the cooking vessel 130 is positioned in the positioning part 111, a front end of the elastic protrusion 201 is pressed by an inner wall of the positioning part 111, protrudes into the locking groove 135a, and is elastically inserted and coupled so that the cooking vessel 130 is locked not to be optionally separated from the positioning part 111.

Furthermore, if only a release push button 203 is pushed downward in a state that the cooking vessel 130 is positioned and coupled with the positioning part 111, a bottom end of the release push button 203 pushes an inclined portion of the elastic protrusion 201 to move the front end of the elastic protrusion 201 to the outside by force so that locking is released to separate the cooking vessel 130 from the positioning part 111.

The agitation milling type automatic cooking apparatus 100 according to an exemplary embodiment of the present invention may include an agitation milling part 150 rotated by the drive motor 120 to agitate the materials in the cooking vessel 130 at low speed or mill the materials at high speed in addition to the heating part 160 for heating an inner bottom surface of the cooking vessel 130 so that the materials provided in the cooking vessel 130 may be agitated by low speed rotation of the agitation milling part 150 if necessary. It is preferred that rotation speed (first speed) of the drive motor 120 during agitation is in the range of 30 rpm to 300 rpm. The materials are prevented from being pressed or burnt on an inner wall of the cooking vessel 130 by low speed agitation or the materials are uniformly mixed so that a taste of foods may be improved.

In addition, the agitation milling type automatic cooking apparatus 100 according to an exemplary embodiment of the present invention includes an agitation milling part 150 may include an agitation milling part 150 rotated by the drive motor 120 to agitate materials inside the cooking vessel 130 at slow speed or mill the materials at high speed not to be pressed in addition to the heating part 160 for heating an inner bottom surface of the cooking vessel 130 so that the materials may be milled as a finer particle by high speed rotation of the agitation milling part 150 if necessary.

It is preferred that rotation speed (second speed) of the drive motor 120 during milling is in the range of 4,000 rpm to 6,000 rpm. The particle may be cook as various foods such as finer porridges or soy milks by the high speed milling.

Moreover, in a case of the agitation milling type automatic cooking apparatus 100 according to an exemplary embodiment of the present invention, since a cover coupling sensor 180 configured to provide a signal according to presence of coupling of the vessel cover 140 through the cooking vessel 130 and the positioning part 111 of the main body 110 to the controller 170, heat cooking by the heating part 160 or agitation and/or milling of the materials by the agitation milling part 150 is achieved only when the vessel cover 140 is coupled with the cooking vessel 130, an accident where the materials are bounced through the open top end of the cooking vessel 130 due to high speed milling particularly during cooking may be prevented.

In addition, since the agitation milling type automatic cooking apparatus 100 according to an exemplary embodiment of the present invention includes the locking part 200, the cooking vessel 130 may be prevented from being optionally detached from the positioning part 111 of the main body 110.

Although embodiments of the present invention have been described with reference to a number of illustrative embodiments thereof, it should be understood that numerous other modifications and embodiments can be devised by those skilled in the art that will fall within the spirit and scope of the principles of this disclosure. Accordingly, the above exemplary embodiment is used for the purpose of describing the present invention which is not limited thereto. That is, a range of the present invention may include appended claims all exemplary embodiments in an equivalent range.

## Claims

1. An agitation milling type automatic apparatus comprising:
a main body 110 including a positioning part 111 formed at a top surface of the main body 110;
a drive motor 120 installed inside the main body 110 and provided therein with a drive shaft 121 protruding upward;
a cooking vessel 130 detachably engaged with the positioning part 111 of the main body 110 and formed therein with a cooking space part 131 receiving materials;
a vessel cover 140 detachably engaged with an open top end of the cooking vessel 130;
an agitation milling part 150 provided at a lower center of the cooking vessel 130, connected with the drive shaft 121 to be rotated, and including a blade provided at a top end of the agitation milling means 150 to be rotated in the cooking space part 131 of the cooking vessel 130 to agitate and/or mill the materials;
a heating part 160 configured to heat an inside of the cooking space part 131 of the cooking vessel 130; and
a controller 170 configured to control an operation of the drive motor 120 and the hating part 160 to automatically cook according to an input signal of a control panel 171 provided at one lateral surface of the main body 110.

2. The agitation milling type automatic apparatus of claim 1, wherein: the blade 153 is rotated slowly at first preset speed to agitate the materials or is rotated at high speed of second rotation speed higher than the first speed to mill the materials to prevent the materials from being pressed.

3. The agitation milling type automatic apparatus of claim 1, wherein: the controller 170 operates the heating part 160 for a preset agitation time when an automatic cooking signal is received from the control panel 171 to heat the materials, and rotates the blade 153 of the agitation milling part 150 slowly at first preset speed to prevent the materials from being pressed to agitate the materials, and controls operations of the drive motor 120 and the heating part 160 by rotating the blade 153 of the agitation milling part 150 for a preset milling time at second speed higher than the first speed to mill the materials.

4. The agitation milling type automatic apparatus of claim 2 or claim 3, wherein: the first speed is in a range of 30 rpm to 300 rpm and the second speed is in a range of 4000 rpm to 6000 rpm.

5. The agitation milling type automatic apparatus of claim 1, further comprising a cover coupling sensor 180 installed through the cooking vessel 130 and the positioning part 111 of the main body 110 to provide a signal according to presence of coupling of the vessel cover 140 to the controller 170.

6. The agitation milling type automatic apparatus of claim 5, wherein: the cover coupling sensor 180 comprises a vertical through part 181 vertically formed through one side of the cooking vessel 130; a first operation rod 183 elastically biased upward in the vertical through part 181 and pressed by the vessel cover 140 upon coupling of the vessel cover 140 to be moved downward and including a first magnet 183a provided at a bottom end of the first operation rod 183; a second operation rod 185 movably installed at a position corresponding to the first magnet 183a in the positioning part 111 of the main body 110 and including a second magnet 185a having the same polarity as that of the first magnet 183a provided at a top end of the second operation rod 185; an operation pin 187 including one end coupled with a bottom end of the second operation rod 185 to being vertically moved integrally with the second operation rod 185; and a micro switch 189 connected with an opposite end of the operation pin 187 to be turned on/off according to a vertical motion of the second operation rod 185 to provide a signal according to presence of coupling of the vessel cover 140 to the controller 170.

7. The agitation milling type automatic apparatus of claim 1, further comprising a temperature sensor 190 configured to measure a temperature of the cooking vessel 130 to provide a signal on a cooking temperature to the controller 170.

8. The agitation milling type automatic apparatus of claim 1, further comprising a locking part 200 including an elastic protrusion 201 installed at an inner wall of the positioning part 111 and caught at the cooking vessel 130 upon positioning of the cooking vessel 130 to prevent the cooking vessel 130 from being optionally detached, and a release push button 203 installed on the main body 110 to allow separation of the cooking vessel 130 by retreating the elastic protrusion 201 upon pressing.

9. The agitation milling type automatic apparatus of claim 1, wherein: the drive motor 120 comprises a brushless DC (BLDC) motor.

10. The agitation milling type automatic apparatus of claim 1, wherein: the positioning part 111 of the main body 110 comprises a first connector 113, and a second connector 133 is provided at a bottom surface of the cooking vessel 130 and is electrically connected to the first connector 113 when the cooking vessel 130 is positioned in the positioning part 111 of the main body 110 to supply power to the heating part 160.

11. The agitation milling type automatic apparatus of claim 1, wherein: a first shaft coupler is coupled with a drive shaft 121 of the drive motor 120 and protrudes on the positioning part 111, and a second shaft coupler 151 is provided at a bottom end of the agitation milling part 150 and is connected with the first shaft coupler 123 when the second shaft coupler 151 is positioned in the cooking vessel 130.

12. The agitation milling type automatic apparatus of claim 1, wherein: a through hole 141 is formed at a center of the vessel cover 140 and a stopper 145 is openably and closably coupled with the through hole 141.

13. The agitation milling type automatic apparatus of claim 12, wherein: a steam outlet 145a having a slit shape is formed at an outer peripheral surface of the stopper 145, a protection flap part 145b protrudes outward in a radial direction at a top side of the stopper 145, and a handle 145c is provided at a top surface of the stopper 145.

14. The agitation milling type automatic apparatus of claim 1, wherein:
the agitation milling part comprises:
a rotation shaft configured to receive a torque from the drive motor to rotate the blade;
a bearing cover disposed at a radius outer side of the rotation shaft through a bottom surface of the cooking vessel; and
a detaching lever mounted at a lower portion of the bearing cover,
wherein an upper of the bearing cover is fixed to a lower top side of the cooking vessel, and the detaching lever is selectively coupled with the bearing cover in a bottom surface of the cooking vessel so that the agitation milling part is detached from the cooking vessel.

15. The agitation milling type automatic apparatus of claim 14, wherein:
an assembling protrusion is formed at a radius outer surface of the bearing cover,
an assembling groove receiving the assembling protrusion is formed at a radius inner surface of the detaching lever, and
the detaching lever is rotated in one direction or an opposite direction along an extension direction of the assembling groove and is separated from the bearing cover.
